# EUROPEAN PATENT SPECIFICATION

(11) **EP 1 499 521 B1**
(45) Date of publication and mention of the grant of the patent: **07.11.2007**
(21) Application number: 03714923.4
(22) Date of filing: 14.04.2003
(51) Int. Cl.: B60R 22/32, A62B 35/00

(54) **DEVICE FOR SEVERING SAFETY BELTS**
VORRICHTUNG ZUM DURCHTRENNEN DER SICHERHEITSGURTEN
DISPOSITIF DE DETACHEMENT DE CEINTURES DE SECURITE

(30) Priority: 19.04.2002 IT UD20020088 U
(43) Date of publication of application: 26.01.2005
(73) Proprietor: Tomasetig, Dario, 33040 Torreano Di Cividale (IT)
(72) Inventor: Tomasetig, Dario, 33040 Torreano Di Cividale (IT)
(74) Representative: Farago, Peter Andreas
(86) International application number: PCT/EP2003/003858
(87) International publication number: WO 2003/089278

(56) References cited:
- DE-A- 3 307 247
- DE-A- 3 318 465
- FR-A- 2 391 739

## Description

### Technical field

The present invention relates to an improvement to the fastening buckle and/or to the fixed, sliding point of safety-belts installed in motor vehicles by using a manually actuatable mechanical device that is capable of quickly severing said belts cleanly and permanently.

Said device is particularly suitable in case of an absolute emergency, such as for example a road accident in which rapid release from the safety-belts is required. The fastening of the buckle is in fact jammed in most cases and therefore the restrained individual is unable to free himself and requires the intervention of other individuals.

### Background art

In the current background art, other patented devices for severing motor vehicle safety-belts are known. They provide for the application of a cutting system arranged on the belts in any point, and therefore sometimes when they are needed they cannot be found easily, because they can move along said belts. This is a severe drawback in terms of the swiftness of the intervention for cleanly cutting the belt in case of absolute need.

A device according to the preamble of claim 1 is known from the generic document DE 33 18 465 A1.

The device of DE 33 18 465, however, does not show the characterizing feature of a safety cap, the provision of which increases the operational safety of the device.

Many road accidents, including ones that have occurred recently, have in fact pointed out these drawbacks. It is known that vehicle occupants have lost their lives because they were trapped inside because of jammed safety-belts.

### Summary of the invention

The aim of the invention is further to:
-- provide a device for severing safety-belts in well-known points such as proximate to the buckle and/or proximate to the upper sliding point of the belt, usually located on the door pillar or proximate to the doors;
-- provide a device that is easy to operate and rapidly accessible for manually severing the safety-belts of motor vehicles,
-- provide a mechanical device that is simple and cheap to manufacture, so as to facilitate marketing for maximum diffusion;
-- provide a device that is easy to fit and install even on existing safety-belts.

### Essence of the invention

The aim of the invention is achieved according to the characteristics of the claims by providing a manually operated mechanical device for severing motor vehicle safety-belts. The device is applied to the buckle that can slide on the belt and is provided for fastening to the lower anchoring point, which is provided with an automatic release button and/or to the upper slot-shaped sliding point of said belt, which is usually located proximate to the door pillar. The application of the device does not compromise the conventional functionality of the safety-belt, leaving it free to slide.

Said device comprises an element that can slide transversely and is provided with at least one cutting blade that slides within an appropriately provided guide. Said element has, at one end, a grip ring in order to pull it and sever the belt in danger conditions. Said cutting element provided with a blade is located proximate to the sliding slot of the belt, as mentioned, on the sliding buckle for fastening said belt and/or on the supporting ring on the upper pillar proximate to the doors.

In a first possible variation, said device can be provided with a cord of suitable length that is connected to the grip point in order to pull out the extractable element; this is done to facilitate the cutting action without having to reach said element directly.

Accordingly, the advantages achieved by the present invention are numerous: the point of the device for quick belt severing is located exactly, i.e., on the buckle and/or on the upper sliding support point, and therefore it is not necessary to search for the device along said belt; the simple construction and low manufacturing cost of the invention facilitate the maximum diffusion of this safety device; finally, it is easy to install on existing safety-belts.

### Brief description of the drawings

The present invention is shown by way of preferred but non-limitative example in the accompanying drawings, wherein:

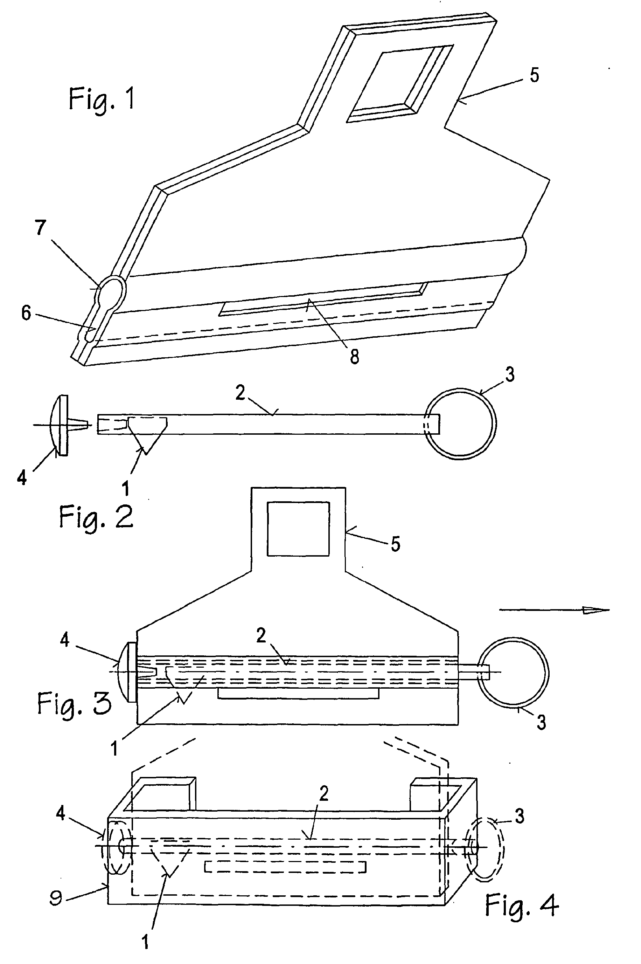

Figures 1 and 2 show a front view of the device, built directly onto the sliding buckle for locking the safety-belt;
Figures 3 and 4 show a perspective view of the device to be fitted to existing buckles.

As shown by the figures, the manually operated mechanical device for severing safety-belts installed in motor vehicles is fitted or formed on the buckle (5), which has a cylindrical sliding seat (7) with a wider portion (6) toward the slot (8) for the passage of the belt. A pull-out element (2) is placed within the sliding seat (7); said element is cylindrical, has suitable dimensions, and has at least one cutting blade (1), which is arranged in such a position that it does not interfere with the passage seat (8) of the safety-belt during its normal use. Such rod (2) has, at one end, a pull ring (3) (on which it is also possible to fasten a cord), while at the other end there is a containment element (4) that acts as a safety (to prevent accidental actuation of the device) and that separates easily when needed.

Said device, completed with a covering (9), can be applied to the buckles of existing safety-belts, namely to the one to be locked on the lower movable anchoring point and/or to the upper fixed one on the door pillar.

Said device can be made of metal and/or other materials that are suitable for the purpose, for example plastic materials.

## Claims

1. Manually operated mechanical device for severing safety-belts installed in vehicles provided with safety-belts, wherein the device comprises a guide (7) formed on or fitted to a movable buckle and/or on a fixed buckle of a safety-belt, the guide (7) being arranged proximate to a slot (8) for the passage of a belt, a rod (2) being arranged in said guide (7) and being provided with at least one cutting blade (I), the rod (2) including means (3) for gripping the rod (2) and extracting the rod (2) from the guide (7), the extraction of the rod (2) causing the passage of the blade (1) in contact with he slot (8) and in full interference therewith, thereby completely severing the safety-belt, **characterized by** the rod (2) being provided, at an end thereof, with a safety cap (4) that separates when the device is used.

2. The manually operated mechanical device according to claim 1, wherein the guide is formed as a sliding seat (7) and wherein both the sliding seat (7) and the rod (2) can be fitted or formed directly on the buckle and arranged equally on either of the long sides of the slot (8).

3. The manually operated mechanical device according to claims 1 or 2, wherein the means (3) for gripping the rod (2) is formed as a grip ring (3).

4. The manually operated mechanical device according to claims 2 or 3, wherein said sliding seat (7) of the rod (2) and the rod (2) itself can be provided according to any sectional geometric configuration (e.g. circular, square, et cetera).

5. The manually operated mechanical device according to any of claims 1-3, wherein the cutting blade (1) is triangular, with one cathetus meant for fixing to said rod (2), with a apex whose tip is perpendicular to the sliding direction, the sides that are contiguous to the tip being furthermore sharp.

6. The manually operated mechanical device according to any of claims 1-3,wherein the blade and/or cutting edge is provided according any geometric shape and arrangement with respect to the position of the safety-belt.

7. The manually operated mechanical device according to any of the preceding claims, wherein the guide (7) of the rod (2) that supports the blade has a straight sliding seat that is parallel to the surface of the buckle and is parallel to the long sides of the slot (8).

8. The manually operated mechanical device for severing safety-belts according any of claims 3-7, wherein a cord is fastened to the grip ring (3) of the rod (2) in order to facilitate remote pulling action without having to reach the device directly.

## Patentansprüche

1. Manuell betätigte mechanische Vorrichtung zur Durchtrennen von Sicherheitsgurten, die in mit Sicherheitsgurten ausgestatteten Fahrzeugen installiert ist, worin die Vorrichtung eine Führung (7) umfasst, die auf einer beweglichen Schnalle und / oder auf einer festen Schnalle eines Sicherheitsgurtes geformt oder in sie eingepasst ist, wobei die Führung (7) nahe einem Schlitz (8) zum Hindurchgleiten eines Gurtes angeordnet ist, wobei ein Stab (2) in der Führung (7) angeordnet und mit mindestens einer Schneidkante (1) ausgestattet ist, wobei der Stab (2) Mittel (3) zum Greifen des Stabes (2) und Herausziehen des Stabes (2) aus der Führung (7) einschließt, wobei das Herausziehen des Stabes (2) das Hindurchgleiten der Klinge (1) in Kontakt mit dem Schlitz (8) und in vollem Eingriff damit verursacht, wodurch der Sicherheitsgurt vollständig durchgetrennt wird, **dadurch gekennzeichnet, dass** der Stab (2) an einem Ende davon mit einer Sicherheitskappe (4) ausgestattet ist, die sich löst, wenn die Vorrichtung verwendet wird.

2. Die manuell betätigte mechanische Vorrichtung gemäß Anspruch 1, worin die Führung als Gleitsitz (7) geformt ist und worin sowohl der Gleitsitz (7) als auch der Stab (2) direkt an der Schnalle eingepasst oder geformt und gleichermaßen an irgendeiner der langen Seiten des Schlitzes (8) angeordnet sein können.

3. Die manuell betätigte mechanische Vorrichtung gemäß den Ansprüchen 1 oder 2, worin das Mittel (3) zum Greifen des Stabes (2) als ein Greifring (3) geformt ist.

4. Die manuell betätigte mechanische Vorrichtung gemäß den Ansprüchen 2 oder 3, worin der Gleitsitz (7) des Stabes (2) und der Stab (2) selbst gemäß jeder beliebigen geometrischen Querschnitts-Konfiguration (zum Beispiel kreisförmig, quadratisch usw.) bereitgestellt werden können.

5. Die manuell betätigte mechanische Vorrichtung gemäß irgendeinem der Ansprüche 1 bis 3, worin die Schneidkante (1) dreieckig ist, mit einer Kathete, die zur Befestigung am Stab (2) bestimmt ist, mit einem Scheitelpunkt, deren Spitze rechtwinklig zur Gleitrichtung ist, wobei die Seiten, die an die Spitze angrenzen, außerdem scharf sind.

6. Die manuell betätigte mechanische Vorrichtung gemäß irgendeinem der Ansprüche 1 bis 3, worin die Klinge und / oder Schneidkante gemäß einer beliebigen geometrischen Form und Anordnung in Bezug zur Position des Sicherheitsgurtes bereitgestellt wird.

7. Die manuell betätigte mechanische Vorrichtung gemäß irgendeinem der obigen Ansprüche, worin die Führung (7) des Stabes (2), welcher die Klinge hält, einen geraden Gleitsitz hat, der parallel zur Oberfläche der Schnalle und zu den langen Seiten des Schlitzes (8) ist.

8. Die manuell betätigte mechanische Vorrichtung zum Lösen von Sicherheitsgurten gemäß irgendeinem der Ansprüche 3 bis 7, worin eine Schnur am Greifring (3) des Stabes (2) befestigt ist, um einen Fern-Zugvorgang zu erleichtern, ohne dass die Vorrichtung direkt berührt werden muss.

## Revendications

1. Dispositif mécanique actionné manuellement, pour séparer des ceintures de sécurité installées dans des véhicules équipés de ceintures de sécurité, dans lequel le dispositif comprend un guide (7), formé sur ou monté sur une boucle mobile et/ou sur une boucle fixe d'une ceinture de sécurité, le guide (7) étant agencé à proximité d'une fente (8) pour permettre le passage d'une ceinture, une tige (2) étant agencée dans ledit guide (7) et étant munie d'au moins une lame de coupe (1), la tige (2) comprenant des moyens (3) pour saisir la tige (2) et extraire la tige (2) du guide (7), l'extraction de la tige (2) provoquant le passage de la lame (1), en contact avec la fente (8) et en complète interférence avec elle, de manière à complètement séparer la ceinture de sécurité, **caractérisé en ce que** la tige (2) est munie, à une extrémité de celle-ci, d'un capuchon de sécurité (4), qui se sépare lorsque le dispositif est utilisé.

2. Le dispositif mécanique actionné manuellement selon la revendication 1, dans lequel le guide est formé sous forme de siège coulissant (7), et dans lequel à la fois le siège coulissant (7) et la tige (2) peuvent être montés ou formés directement sur la boucle et agencés également sur l'un des côtés longs de la fente (8).

3. Le dispositif mécanique actionné manuellement selon la revendication 1 ou 2, dans lequel les moyens (3) pour saisir la tige (2) sont conformés en bague de saisie (3).

4. Le dispositif mécanique actionné manuellement selon la revendication 2 ou 3, dans lequel ledit siège coulissant (7) de la tige (2) et la tige (2) elle-même peuvent présenter une section transversale ayant une configuration géométrique quelconque (par exemple, circulaire, carrée, etc.).

5. Le dispositif mécanique actionné manuellement selon l'une des revendications 1 à 3, dans lequel la lame de coupe (1) est triangulaire, un côté de l'angle étant prévu pour la fixation à ladite tige (2), avec un sommet dont le bout est perpendiculaire à la direction de coulissement, les côtés qui sont contigus au bout étant en outre à angle vif.

6. Le dispositif mécanique actionné manuellement selon l'une des revendications 1 à 3, dans lequel la lame et/ou le bord de coupe est/sont d'une forme géométrique et d'un agencement quelconque, par rapport à la position de la ceinture de sécurité.

7. Le dispositif mécanique actionné manuellement selon l'une quelconque des revendications précédentes, dans lequel le guide (7) de la tige (2) qui supporte la lame comprend un siège de coulissement rectiligne, parallèle à la surface de la boucle et parallèle aux côtés longs de la fente (8).

8. Le dispositif mécanique actionné manuellement pour séparer des ceintures de sécurité selon l'une quelconque des revendications 3 à 7, dans lequel un cordon est fixé à l'anneau de saisie (3) de la tige 2, afin de faciliter une action de traction à distance, sans avoir à atteindre directement le dispositif
